# EUROPÄISCHE PATENTSCHRIFT

(11) **EP 2 194 629 B1**
(45) Veröffentlichungstag und Bekanntmachung des Hinweises auf die Patenterteilung: **03.08.2011**
(21) Anmeldenummer: 08170481.9
(22) Anmeldetag: 02.12.2008
(51) Int. Cl.: H02J 3/18, H02M 1/12

(54) **Verfahren zur Störstromkompensation eines elektrischen Systems sowie Störstromkompensationseinrichtung**
Method for compensating interference current of an electrical system and interference current compensation device
Procédé de compensation du courant perturbateur d'un système électrique et dispositif de compensation du courant perturbateur

(43) Veröffentlichungstag der Anmeldung: 09.06.2010
(73) Patentinhaber: ABB Schweiz AG, 5400 Baden (CH)
(72) Erfinder: Daehler, Peter, 5236 Remigen (CH); Wicki, Stefan, 5702 Niederlenz (CH)
(74) Vertreter: ABB Patent Attorneys

(56) Entgegenhaltungen:
- EP-A- 1 513 267
- EP-A- 1 641 138
- US-A1- 2005 057 949
- US-A1- 2005 083 627

## Beschreibung

### Technisches Gebiet

Die Erfindung bezieht sich auf das Gebiet der Leistungselektronik. Sie geht aus von einem Verfahren zur Störstromskompensation eines elektrischen Systems sowie einer Störstromkompensationseinrichtung gemäss dem Oberbegriff der unabhängigen Ansprüche.

### Stand der Technik

Bei vielen elektrischen Systemen mit einer Spannungsquelle, welche beispielsweise eine Spannungsquelle eines elektrischen Versorgungsnetzes ist, ist zudem eine mit der Spannungsquelle über einen Leiter verbundene Serienschaltung einer Induktivität und einer Kapazität vorgesehen, wobei die Induktivität mit der Kapazität dann über einen Leiter seriell verbunden ist. Typischerweise kann parallel zu der Kapazität eine aktive oder passive elektrische Last oder eine Stromquelle, wie beispielsweise eine rotierende elektrische Maschine mit zugehöriger leistungselektronischer Speiseeinrichtung, wobei die rotierende elektrische Maschine üblicherweise motorische oder generatorisch betrieben werden kann, geschaltet sein.

Ist die Spannungsquelle eine Spannungsquelle eines elektrischen Wechsel- oder Gleichspannungsversorgungsnetzes, bestehen strenge Anforderungen bezüglich der Einspeisung von unerwünschten

Wechselströmen. Solche unerwünschten Wechselströme können von der Lastseite des elektrischen Systems her kommen, also beispielsweise von einer rotierenden elektrischen Maschine und deren leistungselektronischer Speiseeinrichtung. Als wichtigste Massname zur Beschränkung besagter unerwünschter Wechselströme dienen die Dimensionierung der Induktivität und der Kapazität. Eine Reduktion der unerwünschten Wechselströme durch die Dimensionierung der Induktivität und die Kapazität ist nur sehr beschränkt möglich und mit Mehrgewicht, Platzbedarf und Mehrkosten verbunden.

Eine gattungsgemässe Vorrichtung ist in der US 2005/0083627 A1 angegeben. Darin weist die Vorrichtung eine Filterschaltung auf, die über einen Leiter mit einer Spannungsquelle des elektrischen Systems verbunden ist. Die Filterschaltung ist durch zwei parallel geschaltete Serienschaltungen jeweils einer Induktivität mit einer Kapazität gebildet. Seriell zu der Filterschaltung ist eine Trafowicklung eines Kopplungstransformators geschaltet.

### Darstellung der Erfindung

Aufgabe der Erfindung ist es deshalb, ein Verfahren und eine Vorrichtung für ein elektrisches System anzugeben, wodurch unerwünschte Wechselströme weitestgehend unterdrückt werden können.

Diese Aufgabe wird durch die Merkmale des Anspruchs 1 bzw. des Anspruchs 7 gelöst. In den abhängigen Ansprüchen sind vorteilhafte Weiterbildungen der Erfindung angegeben.

Das elektrische System weist eine Spannungsquelle und eine mit der Spannungsquelle parallel über einen Leiter verbundene Serienschaltung einer Induktivität und einer Kapazität auf, wobei die Induktivität mit der Kapazität über einen Leiter seriell verbunden ist. Beim erfindungsgemässe Verfahren wird nun der Leiter der Verbindung der Spannungsquelle mit der Serienschaltung der Induktivität mit der Kapazität oder der Leiter der Serienschaltung der Induktivität mit der Kapazität von einem magnetisierbaren Ring mit einem Luftspalt einer erfindungsgemässen Störstromkompensationseinrichtung umschlossen. Ferner wird eine Kompensationsspannung durch Magnetisierung des magnetisierbaren Rings mittels einer Magnetisierungsspule der Störstromkompensationseinrichtung an den Leiter der Verbindung der Spannungsquelle mit der Serienschaltung der Induktivität mit der Kapazität oder an den Leiter der Serienschaltung der Induktivität mit der Kapazität angelegt. Die Kompensationsspannung ist vorzugsweise eine Wechselspannung mit einer vorgebbaren Frequenz, welche der Frequenz des zu unterdrückenden Wechselstromes entspricht. Die Kompensationsspannung bewirkt, dass ein durch einen unerwünschten Wechselstrom am Kondensator aufgebauter unerwünschter Wechselspannungsanteil in der Kondensatorspannung kompensiert wird. In Folge dieser Kompensation fliesst vorteilhaft auch kein unerwünschter Wechselstrom mit entsprechender Frequenz mehr, so dass Anforderungen bezüglich unerwünschten Wechselströmen, welche elektrische Systeme typischerweise einhalten müssen, mit Vorteil eingehalten werden können.

Die erfindungsgemässe Störstromkompensationseinrichtung weist den magnetisierbaren Ring mit dem Luftspalt auf, wobei der Leiter der Verbindung der Spannungsquelle mit der Serienschaltung der Induktivität mit der Kapazität oder der Leiter der Serienschaltung der Induktivität mit der Kapazität von dem magnetisierbaren Ring mit einem Luftspalt zum Anlegen einer Kompensationsspannung durch Magnetisierung des magnetisierbaren Rings mittels der Magnetisierungsspule umschlossen ist. Die Störstromkompensationseinrichtung ist damit denkbar einfach und unkompliziert aufgebaut, ist demzufolge sehr robust, leicht und benötigt ein Minimum an Platz. Gerade bei Traktionsanwendungen, d.h. wenn das elektrische System beispielsweise ein von einem Gleichspannungsnetz gespeistes elektrisches Schienenfahrzeug ist, sind Einfachheit, geringes Gewicht, Robustheit und geringer Platzbedarf die Hauptanforderungen, so dass die erfindungsgemässe Störstromkompensationseinrichtung 1 prädestiniert für eine solche Anwendung ist.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Störstromkompensationsein- richtung und
- Fig. 2: eine zweite Ausführungsform der erfindungsgemässen Störstromkompensationsein- richtung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

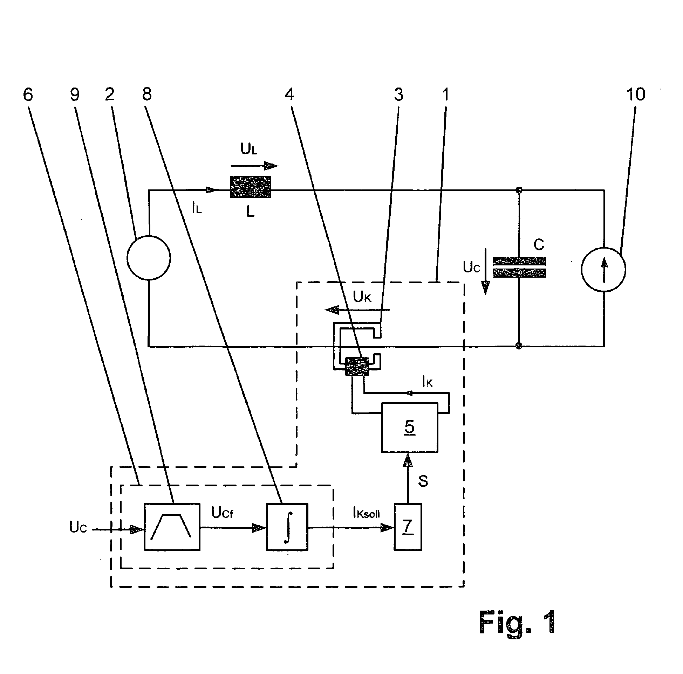

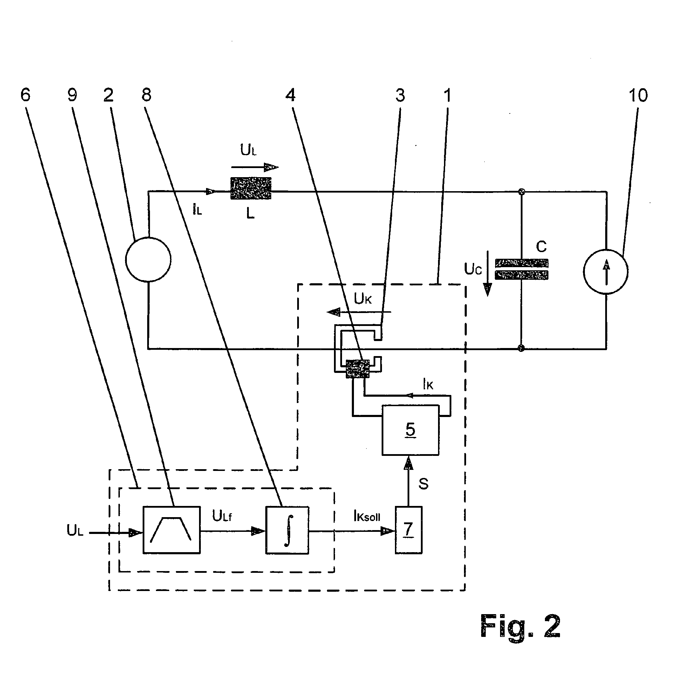

In Fig. 1 ist eine erste Ausführungsform einer erfindungsgemässen Störstromkompensationseinrichtung 1. Weiterhin zeigt Fig. 2 eine zweite Ausführungsform der erfindungsgemässen Störstromkompensationseinrichtung 1. Das in Fig. 1 und Fig. 2 ferner gezeigte elektrische System umfasst eine Spannungsquelle 2 und eine mit der Spannungsquelle 2 parallel über einen Leiter verbundene Serienschaltung einer Induktivität L und einer Kapazität C, wobei die Induktivität L mit der Kapazität C über einen Leiter seriell verbunden ist. Nach dem erfindungsgemässen Verfahren wird nun der Leiter der Verbindung der Spannungsquelle 2 mit der Serienschaltung der Induktivität L mit der Kapazität C oder der Leiter der Serienschaltung der Induktivität L mit der Kapazität C von einem magnetisierbaren Ring 3 mit einem Luftspalt einer erfindungsgemässen Störstromkompensationseinnchtung 1, welche nachfolgend noch detailliert erläutert wird, umschlossen. Der magnetisierbare Ring kann beispielsweise ferromagnetisches Material aufweisen und/oder geblecht ausgeführt sein. Allgemein sind jegliche, dem Fachmann bekannte Ausführungsformen und Materialien für magnetisierbare Ringe denkbar. Darüber hinaus wird eine Kompensationsspannung U_{K} durch Magnetisierung des magnetisierbaren Rings 3 mittels einer Magnetisierungsspule 4 der Störstromkompensationseinrichtung 1 an den Leiter der Verbindung der Spannungsquelle 2 mit der Serienschaltung der Induktivität L mit der Kapazität C oder an den Leiter der Serienschaltung der Induktivität L mit der Kapazität C angelegt. Die Kompensationsspannung U_{K} bewirkt, dass ein durch einen unerwünschten Wechselstrom am Kondensator C aufgebauter unerwünschter Wechselspannungsanteil in der Kondensatorspannung U_{C} kompensiert wird. In Folge dieser Kompensation fliesst vorteilhaft auch kein unerwünschter Wechselstrom mit entsprechender Frequenz mehr. Anforderungen bezüglich unerwünschten Wechselströmen, welche elektrische Systeme typischerweise einhalten müssen, können so mit Vorteil eingehalten werden. Solche unerwünschten Wechselströme können von einer elektrischen Last 10 des elektrischen Systems her kommen, also beispielsweise von einer rotierenden elektrischen Maschine und deren leistungselektronischer Speiseeinrichtung, wobei eine solche elektrische Last 10 typischerweise parallel zu der Kapazität C geschaltet ist, wie in Fig. 1 und Fig. 2 gezeigt.

Vorzugsweise wird zur Magnetisierung des magnetisierbaren Rings 3 ein Kompensationsstrom I_{K} in die Magnetisierungsspule 4 mittels einer Umrichtereinheit 5 der Störstromkompensationseinrichtung 1 mit einer Vielzahl an ansteuerbaren Leistungshalbleiterschaltern eingespeist. Die Magnetisierungsspule 4 und der magnetisierbare Ring 3 wirken nach Art eines Differenzierers, d.h. der Kompensationsstrom I_{K} wird abgeleitet, so dass die gewünschte Kompensationsspannung U_{K} gebildet werden kann. Desweiteren wird mittels einer Regelungseinrichtung 6 der Störstromkompensationseinrichtung 1 nach Fig. 1 ein Kompensationsstromvorgabewert I_{Ksoll} in Abhängigkeit der Spannung U_{C} an der Kapazität C erzeugt wird, wobei dann die ansteuerbaren Leistungshalbleiterschalter der Umrichtereinheit 5 mittels eines aus dem Kompensationsstromvorgabewert I_{Ksoll} durch eine Ansteuerschaltung 7 der Störstromkompensationseinrichtung 1 gebildeten Ansteuersignals S angesteuert werden. Der Kompensationsstromvorgabewert I_{Ksoll} wird durch Integration mittels einer Integriereinheit 8 der Regelungseinrichtung 6 aus einer gefilterten Spannung U_{Cf} an der Kapazität C gebildet, wobei die gefilterte Spannung U_{Cf} an der Kapazität C durch Bandpassfilterung mittels eines Bandpassfilters 9 der Regelungseinrichtung 6 aus der Spannung U_{C} an der Kapazität C gebildet wird. Durch die Bandpassfilterung wird der unerwünschte Wechselspannungsanteil U_{Cf} in der Kondensatorspannung U_{C}, hervorgerufen durch einen zu kompensierenden unerwünschten Wechselstrom, der hauptsächlich durch die elektrische Last 10 verursacht ist, bezüglich einer Frequenz extrahiert und daraus dann der Kompensationsstromvorgabewert I_{Ksoll} in vorstehend beschriebener Weise gebildet.

Verfahrensmässig alternativ ist es auch denkbar, dass mittels der Regelungseinrichtung 6 der Störstromkompensationseinrichtung 1 gemäss Fig. 2 der Kompensationsstromvorgabewert I_{Ksoll} in Abhängigkeit der Spannung U_{L} an der Induktivität L erzeugt wird, wobei dann die ansteuerbaren Leistungshalbleiterschalter der Umrichtereinheit 5 mittels eines aus dem Kompensationsstromvorgabewert I_{Ksoll} durch eine Ansteuerschaltung 7 der Störstromkompensationseinrichtung 1 gebildeten Ansteuersignals S angesteuert werden. Gemäss Fig. 2 wird der Kompensationsstromvorgabewert I_{Ksoll} dann durch Integration mittels der Integriereinheit 8 der Regelungseinrichtung 6 aus einer gefilterten Spannung U_{Lf} an der Induktivität L gebildet, wobei die gefilterte Spannung U_{Lf} an der Induktivität L durch Bandpassfilterung mittels eines Bandpassfilters 9 der Regelungseinrichtung 6 aus der Spannung U_{L} an der Induktivität L gebildet wird. Durch die Bandpassfilterung wird der unerwünschte Wechselspannungsanteil U_{Lf} in der Induktivitätsspannung U_{L}, hervorgerufen durch einen zu kompensierenden unerwünschten Wechselstrom, der durch die elektrische Last 10 und zusätzlich durch die Spannungsquelle 2 verursacht ist, bezüglich einer Frequenz extrahiert und daraus dann der Kompensationsstromvorgabewert I_{Ksoll} in vorstehend beschriebener Weise gebildet. Vorteilhaft lässt sich somit auch ein unerwünschter Wechselstrom weitestgehend unterdrücken, der von der Spannungsquelle 2 verursacht ist, wie dies beispielsweise bei einer Spannungsquelle eines elektrisches Wechsel- oder Gleichspannungsversorgungsnetzes auftreten kann.

Die erfindungsgemässe Störstromkompensationseinrichtung 1 gemäss Fig. 1 und Fig. 2 weist den magnetisierbaren Ring 3 mit dem Luftspalt auf, wobei der Leiter der Verbindung der Spannungsquelle 2 mit der Serienschaltung der Induktivität L mit der Kapazität C oder der Leiter der Serienschaltung der Induktivität L mit der Kapazität C von dem magnetisierbaren Ring 3 mit einem Luftspalt zum Anlegen der Kompensationsspannung U_{K} durch Magnetisierung des magnetisierbaren Rings 3 mittels der Magnetisierungsspule 4 umschlossen ist. Die Störstromkompensationseinrichtung 1 ist demzufolge denkbar einfach und unkompliziert aufgebaut, sehr robust, leicht und benötigt ein Minimum an Platz. Gerade bei Traktionsanwendungen, d.h. wenn das elektrische System beispielsweise ein von einem Gleichspannungsnetz gespeistes elektrisches Schienenfahrzeug ist, sind Einfachheit, geringes Gewicht, Robustheit und geringer Platzbedarf die Hauptanforderungen, so dass die erfindungsgemässe Störstromkompensationseinrichtung 1 prädestiniert für eine solche Anwendung ist.

Ferner ist die bereits erwähnte Umrichtereinheit 5 mit einer Vielzahl an ansteuerbaren Leistungshalbleiterschaltern zur Einspeisung des Kompensationsstromes I_{K} mit der Magnetisierungsspule 4 verbunden. Als Umrichtereinheit ist jede als Spannungsumrichter, Stromumrichter oder Matrixumrichter ausgebildete Umrichtereinheit denkbar.

Die erfindungsgemässe Störstromkompensationseinrichtung 1 umfasst gemäss Fig. 1 ferner die der Erzeugung des Kompensationsstromvorgabewertes I_{Ksoll} in Abhängigkeit der Spannung U_{C} an der Kapazität C dienende Regelungseinrichtung 6, welche Regelungseinrichtung 6 über die Ansteuerschaltung 7 zur Bildung eines Ansteuersignals S aus dem Kompensationsstromvorgabewert I_{Ksoll} mit den ansteuerbaren Leistungshalbleiterschaltern der Umrichtereinheit 5 verbunden ist.

Gemäss Fig. 1 weist die Regelungseinrichtung 6 die Integriereinheit 8 zur Bildung des Kompensationsstromvorgabewertes I_{Ksoll} aus der gefilterten Spannung U_{Cf} an der Kapazität C auf, wobei die Regelungseinrichtung 6 zusätzlich den Bandpassfilter 9 zur Bildung der gefilterten Spannung U_{Cf} an der Kapazität C aus der Spannung U_{C} an der Kapazität C aufweist. Der Bandpassfilter 9 ermöglicht den unerwünschten Wechselspannungsanteil U_{Cf} in der Kondensatorspannung U_{C}, hervorgerufen durch einen zu kompensierenden unerwünschten Wechselstrom, der hauptsächlich durch die elektrische Last 10 verursacht ist, bezüglich einer Frequenz zu extrahieren, wobei daraus dann der Kompensationsstromvorgabewert I_{Ksoll} in vorstehend beschriebener Weise gebildet wird.

Alternativ zu Fig. 1 umfasst die Störstromkompensationseinrichtung 1 gemäss Fig. 2 die der Erzeugung des Kompensationsstromvorgabewertes I_{Ksoll} in Abhängigkeit der Spannung U_{L} an der Induktivität L dienende Regelungseinrichtung 6, welche Regelungseinrichtung 6 ebenfalls über eine Ansteuerschaltung 7 zur Bildung des Ansteuersignals S aus dem Kompensationsstromvorgabewert I_{Ksoll} mit den ansteuerbaren Leistungshalbleiterschaltern der Umrichtereinheit 5 verbunden ist. Gemäss Fig. 2 weist Regelungseinrichtung 6 dann eine Integriereinheit 8 zur Bildung des Kompensationsstromvorgabewertes I_{Ksoll} aus der gefilterten Spannung U_{Lf} an der Induktivität L auf, wobei die Regelungseinrichtung 6 zudem einen Bandpassfilter 9 zur Bildung der gefilterten Spannung U_{Lf} an der Induktivität L aus der Spannung U_{L} an der Induktivität L aufweist. Der Bandpassfilter 9 ermöglicht den unerwünschten Wechselspannungsanteil U_{Lf} in der Induktivitätsspannung U_{L}, hervorgerufen durch einen zu kompensierenden unerwünschten Wechselstrom, der durch die elektrische Last 10 und zusätzlich durch die Spannungsquelle 2 verursacht ist, bezüglich einer Frequenz zu extrahieren, wobei daraus dann der Kompensationsstromvorgabewert I_{Ksoll} in vorstehend beschriebener Weise gebildet wird. Vorteilhaft lässt sich somit auch ein unerwünschter Wechselstrom weitestgehend unterdrücken, der von der Spannungsquelle 2 verursacht ist, wie dies beispielsweise bei einer Spannungsquelle eines elektrisches Wechsel- oder Gleichspannungsversorgungsnetzes auftreten kann.

### Bezugszeichenliste

- 1: Störstromkompensationseinrichtung
- 2: Spannungsquelle
- 3: magnetisierbarer Ring
- 4: Magnetisierungsspule
- 5: Umrichtereinheit
- 6: Regelungseinrichtung
- 7: Ansteuerschaltung
- 8: Integriereinheit
- 9: Bandpassfilter
- 10: elektrische Last

## Patentansprüche

1. Verfahren zur Störstromkompensation eines elektrischen Systems mittels einer Störstromkompensationseinrichtung (1), welches elektrische System eine Spannungsquelle (2) und eine mit der Spannungsquelle (2) parallel über einen Leiter verbundene Serienschaltung einer Induktivität (L) und einer Kapazität (C) aufweist, wobei die Induktivität (L) mit der Kapazität (C) über einen Leiter seriell verbunden ist,
**dadurch gekennzeichnet,**
**dass** der Leiter der Verbindung der Spannungsquelle (2) mit der Serienschaltung der Induktivität (L) mit der Kapazität (C) oder der Leiter der Serienschaltung der Induktivität (L) mit der Kapazität (C) von einem magnetisierbaren Ring (3) mit einem Luftspalt der Störstromkompensationseinrichtung (1) umschlossen wird
**dass** eine Kompensationsspannung (U_{K}) durch Magnetisierung des magnetisierbaren Rings (3) mittels einer Magnetisierungsspule (4) der Störstromkompensationseinrichtung (1) an den Leiter der Verbindung der Spannungsquelle (2) mit der Serienschaltung der Induktivität (L) mit der Kapazität (C) oder an den Leiter der Serienschaltung der Induktivität (L) mit der Kapazität (C) angelegt wird.

2. Verfahren nach Anspruch 1, **dadurch gekennzeichnet, dass** zur Magnetisierung des magnetisierbaren Rings (3) ein Kompensationsstrom (I_{K}) in die Magnetisierungsspule (4) mittels einer Umrichtereinheit (5) der Störstromkompensationseinrichtung (1) mit einer Vielzahl an ansteuerbaren Leistungshalbleiterschaltern eingespeist wird.

3. Verfahren nach Anspruch 2, **dadurch gekennzeichnet, dass** mittels einer Regelungseinrichtung (6) der Störstromkompensationseinrichtung (1) ein Kompensationsstromvorgabewert (I_{Ksoll}) in Abhängigkeit der Spannung (U_{C}) an der Kapazität (C) erzeugt wird, und
dass die ansteuerbaren Leistungshalbleiterschalter der Umrichtereinheit (5) mittels eines aus dem Kompensationsstromvorgabewert (I_{Ksoll}) durch eine Ansteuerschaltung (7) der Störstromkompensationseinrichtung (1) gebildeten Ansteuersignals (S) angesteuert werden.

4. Verfahren nach Anspruch 3, **dadurch gekennzeichnet, dass** der Kompensationsstromvorgabewert (I_{Ksoll}) durch Integration mittels einer Integriereinheit (8) der Regelungseinrichtung (6) aus einer gefilterten Spannung (U_{Cf}) an der Kapazität (C) gebildet wird, und
dass die gefilterte Spannung (U_{Cf}) an der Kapazität (C) durch Bandpassfilterung mittels eines Bandpassfilters (9) der Regelungseinrichtung (6) aus der Spannung (U_{C}) an der Kapazität (C) gebildet wird.

5. Verfahren nach Anspruch 2, **dadurch gekennzeichnet, dass** mittels einer Regelungseinrichtung (6) der Störstromkompensationseinrichtung (1) ein Kompensationsstromvorgabewert (I_{Ksoll}) in Abhängigkeit der Spannung (U_{L}) an der Induktivität (L) erzeugt wird, und
dass die ansteuerbaren Leistungshalloleiterschalter der Umrichtereinheit (5) mittels eines aus dem Kompensationsstromvorgabewert (I_{Ksoll}) durch eine Ansteuerschaltung (7) der Störstromkompensationseinrichtung (1) gebildeten Ansteuersignals (S) angesteuert werden.

6. Verfahren nach Anspruch 5, **dadurch gekennzeichnet, dass** der Kompensationsstromvorgabewert (I_{Ksoll}) durch Integration mittels einer Integriereinheit (8) der Regelungseinrichtung (6) aus einer gefilterten Spannung (U_{Lf}) an der Induktivität (L) gebildet wird, und
dass die gefilterte Spannung (U_{Lf}) an der Induktivität (L) durch Bandpassfilterung mittels eines Bandpassfilters (9) der Regelungseinrichtung (6) aus der Spannung (U_{L}) an der Induktivität (L) gebildet wird.

7. Störstromkompensationseinrichtung (1) eines elektrischen Systems, welches elektrische System eine Spannungsquelle (2) und eine mit der Spannungsquelle (2) parallel über einen Leiter verbundene Serienschaltung einer Induktivität (L) und einer Kapazität (C) aufweist, wobei die Induktivität (L) mit der Kapazität (C) über einen Leiter seriell verbunden ist,
**dadurch gekennzeichnet,**
**dass** der Leiter der Verbindung der Spannungsquelle (2) mit der Serienschaltung der Induktivität (L) mit der Kapazität (C) oder der Leiter der Serienschaltung der Induktivität (L) mit der Kapazität (C) von einem magnetisierbaren Ring (3) mit einem Luftspalt zum Anlegen einer Kompensationsspannung (U_{K}) durch Magnetisierung des magnetisierbaren Rings (3) mittels einer Magnetisierungsspule (4) umschlossen ist.

8. Störstromkompensationseinrichtung (1) nach Anspruch 7, **dadurch gekennzeichnet, dass** eine Umrichtereinheit (5) mit einer Vielzahl an ansteuerbaren Leistungshalbleiterschaltern zur Einspeisung eines Kompensationsstromes (I_{K}) mit der Magnetisierungsspule (4) verbunden ist.

9. Störstromkompensationseinrichtung (1) nach Anspruch 8, **dadurch gekennzeichnet, dass** eine der Erzeugung eines Kompensationsstromvorgabewertes (I_{Ksoll}) in Abhängigkeit der Spannung (U_{C}) an der Kapazität (C) dienende Regelungseinrichtung (6) vorgesehen ist, welche Regelungseinrichtung (6) über eine Ansteuerschaltung (7) zur Bildung eines Ansteuersignals (S) aus dem Kompensationsstromvorgabewert (I_{Ksoll}) mit den ansteuerbaren Leistungshalbleiterschaltern der Umrichtereinheit (5) verbunden ist.

10. Störstromkompensationseinrichtung (1) nach Anspruch 9, **dadurch gekennzeichnet, dass** die Regelungseinrichtung (6) eine Integriereinheit (8) zur Bildung des Kompensationsstromvorgabewertes (I_{Ksoll}) aus einer gefilterten Spannung (U_{Cf}) an der Kapazität (C) aufweist, und dass die Regelungseinrichtung (6) einen Bandpassfilter (9) zur Bildung der gefilterten Spannung (U_{Cf}) an der Kapazität (C) aus der Spannung (U_{C}) an der Kapazität (C) aufweist.

11. Störstromkompensationseinrichtung (1) nach Anspruch 8, **dadurch gekennzeichnet, dass** eine der Erzeugung eines Kompensationsstromvorgabewertes (I_{Ksoll}) in Abhängigkeit der Spannung (U_{L}) an der Induktivität (L) dienende Regelungseinrichtung (6) vorgesehen ist, welche Regelungseinrichtung (6) über eine Ansteuerschaltung (7) zur Bildung eines Ansteuersignals (S) aus dem Kompensationsstromvorgabewert (I_{Ksoll}) mit den ansteuerbaren Leistungshalbleiterschaltern der Umrichtereinheit (5) verbunden ist.

12. Störstromkompensationseinrichtung (1) nach Anspruch 11, **dadurch gekennzeichnet, dass** die Regelungseinrichtung (6) eine Integriereinheit (8) zur Bildung des Kompensationsstromvorgabewertes (I_{Ksoll}) aus einer gefilterten Spannung (U_{Lf}) an der Induktivität (L) aufweist, und dass die Regelungseinrichtung (6) einen Bandpassfilter (9) zur Bildung der gefilterten Spannung (U_{Lf}) an der Induktivität (L) aus der Spannung (U_{L}) an der Induktivität (L) aufweist.

## Claims

1. Method for disturbance current compensation in an electrical system by means of a disturbance current compensation device (1), which electrical system has a voltage source (2) and a series circuit, which is connected in parallel with the voltage source (2) via a conductor, of an inductance (L) with a capacitance (C), with the inductance (L) being connected in series with the capacitance (C) via conductor,
**characterized**
**in that** the conductor for the connection of the voltage source (2) to the series circuit of the inductance (L) with the capacitance (C), or the conductor of the series circuit of the inductance (L) with the capacitance (C) is surrounded by a ring (3) which can be magnetized and has an air gap for the interference current compensation device (1),
**in that** a compensation voltage (Uₖ) is applied by magnetization of the ring (3), which can be magnetized, by means of a magnetization coil (4) for the interference current compensation device (1) to the conductor for the connection of the voltage source (2) to the series circuit of the inductance (L) with the capacitance (C), or to the conductor of the series circuit of the inductance (L) with the capacitance (C).

2. Method according to Claim 1, **characterized in that**, in order to magnetize the ring (3) which can be magnetized, a compensation current (Iₖ) is fed into the magnetization coil (4) by means of a converter unit (5) for the interference current compensation device (1) having a multiplicity of controllable power semiconductor switches.

3. Method according to Claim 1, **characterized in that** a control device (6) for the interference current compensation device (1) is used to produce a compensation current preset value (Iₖₙₒₘ) as a function of the voltage (U_{c}) across the capacitance (C), and
**in that** the controllable power semiconductor switches in the converter unit (5) are controlled by means of a control signal (S), which is formed from the compensation current preset value (Iₖₙₒₘ) by a control circuit (7) for the interference current compensation device (1).

4. Method according to Claim 3, **characterized in that** the compensation current preset value (Iₖₙₒₘ) is formed by integration by means of an integration unit (8) in the control device (6) from a filtered voltage (U_{Cf}) across the capacitance (C), and
**in that** the filtered voltage (U_{Cf}) across the capacitance (C) is formed by bandpass filtering by means of a bandpass filter (9) in the control device (6), from the voltage (U_{C}) across the capacitance (C).

5. Method according to Claim 2, **characterized in that** a control device (6) for the interference current compensation device (1) is used to produce a compensation current preset value (Iₖₙₒₘ) as a function of the voltage (U_{L}) across the inductance (L), and
**in that** the controllable power semiconductor switches in the converter unit (5) are controlled by means of a control signal (S), which is formed from the compensation current preset value (Iₖₙₒₘ) by a control circuit (7) for the interference current compensation device (1).

6. Method according to Claim 5, **characterized in that** the compensation current preset value (Iₖₙₒₘ) is formed by integration by means of an integration unit (8) in the control device (6) from a filtered voltage (U_{Lf}) across the inductance (L), and
**in that** the filtered voltage (U_{Lf}) across the inductance (L) is formed by bandpass filtering by means of a bandpass filter (9) in the control device (6), from the voltage (U_{L}) across the inductance (L).

7. Interference current compensation device (1) for an electrical system, which electrical system has a voltage source (2) and a series circuit, which is connected in parallel with the voltage source (2) via a conductor, of an inductance (L) with a capacitance (C), with the inductance (L) being connected in series with the capacitance (C) via a conductor,
**characterized**
**in that** the conductor for the connection of the voltage source (2) to the series circuit of the inductance (L) with the capacitance (C), or the conductor of the series circuit of the inductance (L) with the capacitance (C) is surrounded by a ring (3) which can be magnetized and has an air gap for applying a compensation voltage (U_{K}), by magnetization of the ring (3), which can be magnetized, by means of a magnetization coil (4).

8. Interference current compensation device (1) according to Claim 7, **characterized in that** a converter unit (5) is connected to the magnetization coil (4) by means of a multiplicity of controllable power semiconductor switches for filling in a compensation current (I_{K}).

9. Interference current compensation device (1) according to Claim 8, **characterized in that** a control device (6) is provided, which is used to produce a compensation current preset value (Iₖₙₒₘ) as a function of the voltage (U_{C}) across the capacitance (C) and is connected to the controllable power semiconductor switches in the converter unit (5) via a control circuit (7) for forming a control signal (S) from the compensation current preset value (Iₖₙₒₘ).

10. Interference current compensation device (1) according to Claim 9, **characterized in that** the control device (6) has an integration unit (8) for forming the compensation current preset value (Iₖₙₒₘ) from a filtered voltage (U_{Cf}) across the capacitance (C), and **in that** the control device (6) has a bandpass filter (9) for forming the filtered voltage (U_{Cf}) across the capacitance (C) from the voltage (U_{C}) across the capacitance (C).

11. Interference current compensation device (1) according to Claim 8, **characterized in that** a control device (6) is provided, which is used to produce a compensation current preset value (Iₖₙₒₘ) as a function of the voltage (U_{L}) across the inductance (L) and is connected to the controllable power semiconductor switches in the converter unit (5) via a control circuit (7) for forming a control signal (S) from the compensation current preset value (Iₖₙₒₘ).

12. Interference current compensation device (1) according to Claim 11, **characterized in that** the control device (6) has an integration unit (8) for forming the compensation current preset value (Iₖₙₒₘ) from a filtered voltage (U_{Lf}) across the inductance (L), and **in that** the control device (6) has a bandpass filter (9) for forming the filtered voltage (U_{Lf}) across the inductance (L) from the voltage (U_{L}) across the inductance (L).

## Revendications

1. Procédé de compensation du courant parasite d'un système électrique au moyen d'un dispositif de compensation du courant parasite (1), lequel système électrique présente une source de tension (2) et un circuit série formé par une inductance (L) et un condensateur (C) et relié en parallèle avec la source de tension (2) par le biais d'un conducteur, l'inductance (L) étant reliée en série avec le condensateur (C) par le biais d'un conducteur, **caractérisé en ce**
**que** le conducteur de la liaison de la source de tension (2) avec le circuit série formé par l'inductance (L) et le condensateur (C) ou le conducteur du circuit série formé par l'inductance (L) et le condensateur (C) est entouré par un anneau magnétisable (3) doté d'un entrefer du dispositif de compensation du courant parasite (1) et
en ce qu'une tension de compensation (U_{K}) est appliquée par magnétisation de l'anneau magnétisable (3) au moyen d'une bobine de magnétisation (4) du dispositif de compensation du courant parasite (1) au conducteur de la liaison de la source de tension (2) avec le circuit série formé par l'inductance (L) et le condensateur (C) ou au conducteur du circuit série formé par l'inductance (L) et le condensateur (C).

2. Procédé selon la revendication 1, **caractérisé en ce que** pour la magnétisation de l'anneau magnétisable (3), un courant de compensation (I_{K}) est injecté dans la bobine de magnétisation (4) au moyen d'une unité convertisseur statique (5) du dispositif de compensation du courant parasite (1) comprenant une pluralité de semiconducteurs de puissance commandables.

3. Procédé selon la revendication 2, **caractérisé en ce qu'**une valeur de consigne du courant de compensation (I_{Ksoll}) est générée au moyen d'un dispositif de régulation (6) du dispositif de compensation du courant parasite (1) en fonction de la tension (U_{C}) aux bornes du condensateur (C) et
**en ce que** les semiconducteurs de puissance commandables de l'unité convertisseur statique (5) sont commandés au moyen d'un signal de commande (S) formé à partir de la valeur de consigne du courant de compensation (I_{Ksoll}) par un circuit de commande (7) du dispositif de compensation du courant parasite (1).

4. Procédé selon la revendication 3, **caractérisé en ce que** la valeur de consigne du courant de compensation (I_{Ksoll}) est formée par intégration au moyen d'une unité intégrateur (8) du dispositif de régulation (6) à partir d'une tension filtrée (U_{Cf}) aux bornes du condensateur (C) et
**en ce que** la tension filtrée (U_{Cf}) aux bornes du condensateur (C) est formée par filtrage passe-bande au moyen d'un filtre passe-bande (9) du dispositif de régulation (6) à partir de la tension (U_{C}) aux bornes du condensateur (C).

5. Procédé selon la revendication 2, **caractérisé en ce qu'**une valeur de consigne du courant de compensation (I_{Ksoll}) est générée au moyen d' un dispositif de régulation (6) du dispositif de compensation du courant parasite (1) en fonction de la tension (U_{L}) aux bornes de l'inductance (L) et
**en ce que** les semiconducteurs de puissance commandables de l'unité convertisseur statique (5) sont commandés au moyen d'un signal de commande (S) formé à partir de la valeur de consigne du courant de compensation (I_{Ksoll}) par un circuit de commande (7) du dispositif de compensation du courant parasite (1).

6. Procédé selon la revendication 5, **caractérisé en ce que** la valeur de consigne du courant de compensation (I_{Ksoll}) est formée par intégration au moyen d'une unité intégrateur (8) du dispositif de régulation (6) à partir d'une tension filtrée (U_{Lf}) aux bornes de l'inductance (L) et
**en ce que** la tension filtrée (U_{Lf}) aux bornes de l'inductance (L) est formée par filtrage passe-bande au moyen d'un filtre passe-bande (9) du dispositif de régulation (6) à partir de la tension (U_{L}) aux bornes de l'inductance (L).

7. Dispositif de compensation du courant parasite (1) d'un système électrique, lequel système électrique présente une source de tension (2) et un circuit série formé par une inductance (L) et un condensateur (C) et relié en parallèle avec la source de tension (2) par le biais d'un conducteur, l'inductance (L) étant reliée en série avec le condensateur (C) par le biais d'un conducteur,
**caractérisé en ce**
**que** le conducteur de la liaison de la source de tension (2) avec le circuit série formé par l'inductance (L) et le condensateur (C) ou le conducteur du circuit série formé par l'inductance (L) et le condensateur (C) est entouré par un anneau magnétisable (3) doté d'un entrefer pour appliquer une tension de compensation (U_{K}) par magnétisation de l'anneau magnétisable (3) au moyen d'une bobine de magnétisation (4).

8. Dispositif de compensation du courant parasite (1) selon la revendication 7, **caractérisé en ce qu'**une unité convertisseur statique (5) comprenant une pluralité de semiconducteurs de puissance commandables est reliée avec la bobine de magnétisation (4) pour injecter un courant de compensation (I_{K}).

9. Dispositif de compensation du courant parasite (1) selon la revendication 8, **caractérisé en ce qu'**il est prévu un dispositif de régulation (6) servant à générer une valeur de consigne du courant de compensation (I_{Ksoll}) en fonction de la tension (U_{C}) aux bornes du condensateur (C), dispositif de régulation (6) qui est relié avec les semiconducteurs de puissance commandables de l'unité convertisseur statique (5) par le biais d'un circuit de commande (7) pour former un signal de commande (S) à partir de la valeur de consigne du courant de compensation (I_{Ksoll}).

10. Dispositif de compensation du courant parasite (1) selon la revendication 9, **caractérisé en ce que** le dispositif de régulation (6) présente une unité intégrateur (8) pour former la valeur de consigne du courant de compensation (I_{Ksoll}) à partir d'une tension filtrée (U_{Cf}) aux bornes du condensateur (C) et **en ce que** le dispositif de régulation (6) présente un filtre passe-bande (9) pour former la tension filtrée (U_{Cf}) aux bornes du condensateur (C) à partir de la tension (U_{C}) aux bornes du condensateur (C).

11. Dispositif de compensation du courant parasite (1) selon la revendication 8, **caractérisé en ce qu'**il est prévu un dispositif de régulation (6) servant à générer une valeur de consigne du courant de compensation (I_{Ksoll}) en fonction de la tension (U_{L}) aux bornes de l'inductance (L), dispositif de régulation (6) qui est relié avec les semiconducteurs de puissance commandables de l'unité convertisseur statique (5) par le biais d'un circuit de commande (7) pour former un signal de commande (S) à partir de la valeur de consigne du courant de compensation (I_{Ksoll}).

12. Dispositif de compensation du courant parasite (1) selon la revendication 11, **caractérisé en ce que** le dispositif de régulation (6) présente une unité intégrateur (8) pour former la valeur de consigne du courant de compensation (I_{Ksoll}) à partir d'une tension filtrée (U_{Lf}) aux bornes de l'inductance (L) et **en ce que** le dispositif de régulation (6) présente un filtre passe-bande (9) pour former la tension filtrée (U_{Lf}) aux bornes de l'inductance (L) à partir de la tension (U_{L}) aux bornes de l'inductance (L).
